# EUROPEAN PATENT APPLICATION

(11) **EP 3 415 714 A1**
(43) Date of publication of application: **19.12.2018**
(21) Application number: 17749905.0
(22) Date of filing: 14.02.2017
(51) Int. Cl.: F01B 23/08, F01B 23/10

(54) **RELATIVE PRESSURE GAS ENERGY PRODUCTION SYSTEM AND PRODUCTION METHOD**

(30) Priority: 14.02.2016 CN 201610084601
(71) Applicant: Beijing Ipec Technology Ltd., Beijing 100089 (CN)
(72) Inventor: CHEN, Weilun, Beijing 100089 (CN); CHEN, Tailun, Beijing 100089 (CN); LI, Huiqin, Beijing 100089 (CN); CHEN, Steve Jun, 597627 (SG)
(74) Representative: Vitina, Maruta
(86) International application number: PCT/CN2017/073461
(87) International publication number: WO 2017/137014

(57) **Abstract**

A relative pressure gas energy production system comprises: a relative pressure gas energy storage device (1) comprising a high-pressure gas storage unit (11) and a low-pressure gas storage unit (12), a first gas being filled with in the high-pressure gas storage unit (11), a second gas being filled with in the low-pressure gas storage unit (12); a gas compressor (2) connected to the low-pressure gas storage unit (12) and the high-pressure gas storage unit (11), respectively, the gas compressor being used to transfer the second gas in the low-pressure gas storage unit (12) to the high-pressure gas storage unit (11), a relative pressure gas energy difference being formed between the high-pressure gas storage unit (11) and the low-pressure gas storage unit (12), such that relative pressure gas energy is formed in the relative pressure gas energy storage device (1); and a power device (3) connected to a rotating shaft (21) of the gas compressor (2), the power device (3) being used to drive the rotating shaft (21) of the gas compressor (2) to rotate. The invention uses the power device (3) to collect energy from the natural environment, and converts the same into mechanism energy, thereby realizing production of relative pressure gas energy. Also disclosed is a relative pressure gas energy production method.

## Description

### TECHNICAL FIELD

The present invention relates to an air energy production system and a production method, and particularly relates to a paired compress gas energy production system and a production method applied in the field of gas energy production.

### BACKGROUND ART

Along with acceleration of energy consumption of the world, and reduction of conventional energy reserves, global action of saving climate change caused by human activities, resource protection, energy independence and energy safety already become one of the major topics of development of human civilization at present. Renewable energy development and utilization gain high attention and constant effort of governments and non-government institutions of the world day by day. Energy in the age of post-industrialization civilization must be clean and sustainable energy of true sense, and no discharge of harmful substances is generated in the energy access process. However, in equipment production of existing energy methods of solar photovoltaic power generation and wind power generation, a large amount of non-ferrous metals, rare minerals and contaminative compounds will be used, and therefore, cannot become the clean energy of ultimate sense.

### SUMMARY OF THE INVENTION

The present invention is aimed at providing a paired compress gas energy production system, in which a power device collects energy in the natural environment and converts the energy into mechanical energy, so as to achieve the aim of producing paired compress gas energy.

The present invention is further to provide a paired compress gas energy production method, which collects the energy in the natural environment and converts the energy into mechanical energy, so as to achieve the aim of producing paired compress gas energy.

The present invention provides a paired compress gas energy production system, the system includes:
a paired compress gas energy storage device, including a high-pressure air container and a low-pressure air container; where the high-pressure air container is filled with first gas, and the low-pressure air container is filled with second gas;
a pneumatic compressor, connected with the high-pressure air container and the lower pressure air container, respectively; where the pneumatic compressor is used for transferring the second gas in the low-pressure air container into the high-pressure air container; a paired compress gas energy difference is formed between the high-pressure air container and the low-pressure air container, and a paired compress gas energy is formed in the paired compress gas energy storage device; and
a power device connected with a rotating shaft of the pneumatic compressor and used for driving the rotating shaft of the pneumatic compressor to rotate.

The invention also provides a paired compress gas energy production method, the method includes the steps of providing a high-pressure air container filled with first gas and a low-pressure air container filled with second gas; transferring the second gas in the low-pressure air container into the high-pressure air container; and forming compress gas difference capable of reflecting paired compress gas energy between the low-pressure air container and the high-pressure air container.

The present invention has the following benefits: according to the paired compress gas energy production system and production method, wind energy, ocean wave energy or ocean current energy in the natural environment are collected by a power device (a wind turbine, a water floating machine, a vertical water turbine and a hovering copter), and are converted into mechanical energy by the pneumatic compressor, then are stored in the paired compress gas energy storage device in the form of paired compress gas energy.

### BRIEF DESCRIPTION OF THE DRAWINGS

The following further illustrates the present invention in combination with drawings and embodiments.
Fig. 1 is a structural schematic diagram of the paired compress gas energy production system according to the present invention.
Fig. 2 is a structural schematic diagram of a selectable embodiment of the paired compress gas energy storage device according to the present invention.
Fig. 3 is a structural schematic diagram of a selectable embodiment of the power device (namely the wind turbine) according to the present invention.
Fig. 4 is a structural schematic diagram of a selectable embodiment of blades of the wind turbine according to the present invention.
Fig. 5 is a structural schematic diagram of another selectable embodiment of the blades of the wind turbine according to the present invention.
Fig. 6 is a side-view schematic diagram of a windward wind wheel and a leeward wind wheel of the wind turbine according to the present invention.
Fig. 7 is a side-view schematic diagram of the blades of the wind turbine according to the present invention.
Fig. 8 is a side-view schematic diagram of a state that adjusting blades of the wind turbine drive the angle blades to rotate according to the present invention.
Fig. 9 is an overlook schematic diagram of another selectable embodiment of a power device (that is the water floating machine) according to the present invention.
Fig. 10 is a structural schematic diagram of a use state with matching of driving sleeves and a transmission main shaft according to the present invention.
Fig. 11 is a structural schematic diagram of another use state with matching of the driving sleeves and the transmission main shaft according to the present invention.
Fig. 12 is a structural schematic diagram of a use state with combination of the driving sleeves and floating members according to the present invention.
Fig. 13 is a structural schematic diagram of further another selectable embodiment of the power device (that is a vertical water turbine) according to the present invention.
Fig. 14 is a structural schematic diagram of a selectable embodiment of sub-blades according to the present invention.
Fig. 15 is a structural schematic diagram of another selectable embodiment of sub-blades according to the present invention.
Fig. 16 is an overlook schematic diagram of the first movable blades and the second movable blades according to the present invention.
Fig. 17 is a structural schematic diagram of yet another selectable embodiment of the poser device (that is the hovering copter) according to the present invention.
Fig. 18 is a structural schematic diagram of a selectable embodiment of the hovering copter according to the present invention.

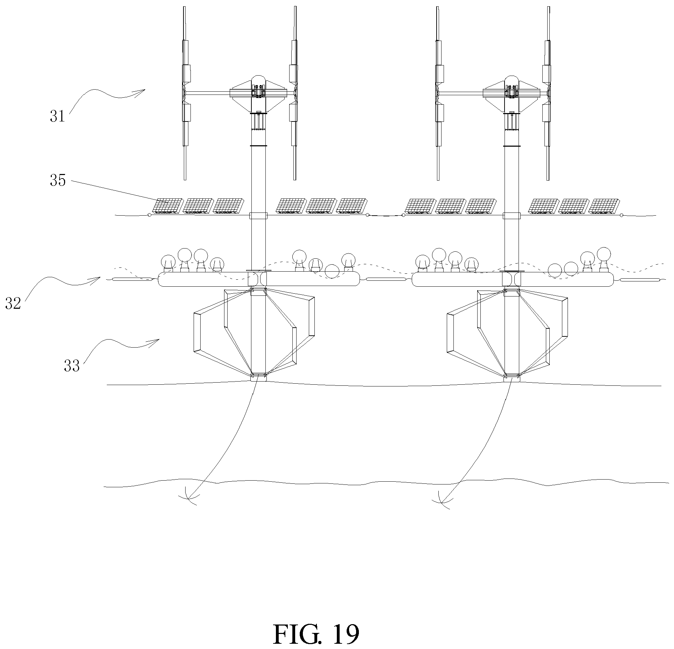

Fig. 19 is a structural schematic diagram of a combined structure of the wind turbine, the water floating machine and the vertical water turbine according to the present invention.

### DETAILED DESCRIPTION OF THE INVENTION

The following clearly and completely describes the technical solutions in the embodiments of the present invention with reference to the accompanying drawings in the embodiments of the present invention. Apparently, the described embodiments are some of the embodiments of the present invention rather than all of the embodiments. All other embodiments obtained by a person of ordinary skill in the art based on the embodiments of the present invention without creative efforts shall fall within the protection scope of the present disclosure.

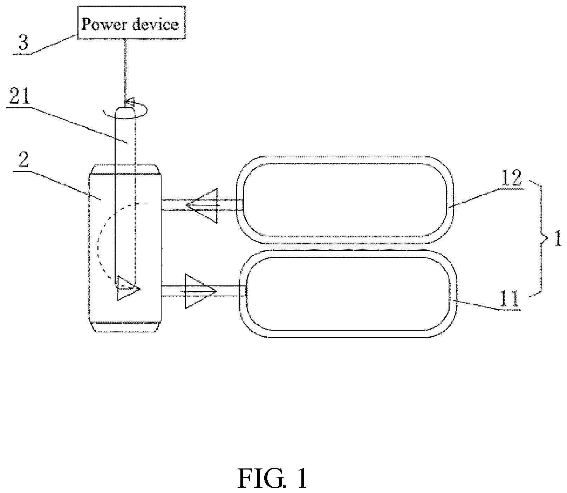

As shown in Fig. 1, the present invention provides a paired compress gas energy production system, which comprises a paired compress gas energy storage device 1, a a pneumatic compressor 2 and a power device 3, where the paired compress gas energy storage device includes a high-pressure air container 11 and a low-pressure air container 12, the high-pressure air container 11 is filled with first gas, and the low-pressure air container 12 is filled with second gas; the pneumatic compressor 2 is respectively connected with the low-pressure air container 12 and the high-pressure air container 12, the pneumatic compressor 2 is used for transferring the second gas in the low-pressure air container 12 into the high-pressure air container 11, the paired compress gas energy difference is formed between the high-pressure air container 11 and the low-pressure air container 12, that is, a compress gas difference capable of reflecting paired compress gas energy is formed between the high-pressure air container 11 and the low-pressure air container 12, and the paired compress gas energy is formed in the paired compress gas energy storage device 1; and the power device 3 is connected with a rotating shaft 21 of the pneumatic compressor 2, and is used for driving the rotating shaft 21 of the pneumatic compressor 2 to rotate.

Specifically, in a feasible embodiment, the paired compress gas energy storage device 1 is formed by a pair of respectively-sealed cylinders, one cylinder (namely the high-pressure air container 11) is filled with first gas, and the other cylinder (namely the low-pressure air container 12) is filled with second gas.

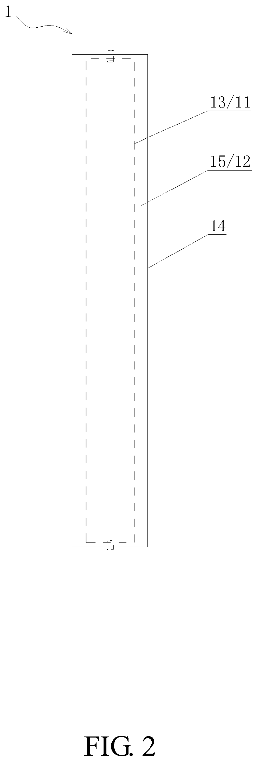

In another feasible embodiment, as shown in Fig. 2, the paired compress gas energy storage device 1 comprises an inner body 13 and an outer body 14 sleeved on the outside of the inner body 13, the inner body is filled with first gas, a cavity 15 formed between the outer body 14 and the inner body 13 is filled with second gas, and in the present embodiment, the inner body 13 is the high-pressure air container 11, and the cavity 15 is the low-pressure air container 12; or, in other embodiments, the inner body 13 is the low-pressure air container 12, the inner body 13 is filled with second gas, the cavity 15 is the high-pressure air container 11, and the cavity 15 is filled with first gas. When the paired compress gas energy storage device 1 is located on the ground, at this moment, the inner body 13 is the high-pressure air container 11, the first gas therein is high-pressure gas, the cavity 15 is the low-pressure air container 12, and the second gas therein is low-pressure gas; when the paired compress gas energy storage device 1 is located underwater or underground, because underwater or underground pressure environment is high-pressure, at this moment, the inner body 13 is the low-pressure air container 12, the second gas therein is the low-pressure gas, the cavity 15 is the high-pressure air container 11, and the first gas therein is high-pressure gas, and thus being favorable for alleviating stress on the wall of the outer body 14 and offsetting the retracting pressure of the outer body 14.

In the present embodiment, the pressure intensity of the high-pressure gas is higher than that of the low-pressure gas, that is, the pressure intensity of the first gas is higher than that of the second gas; the pressure intensity of the first gas may be 0.1MPa∼ 100MPa, and the pressure intensity of the second gas may be 100Pa∼30MPa. Further, the first gas and the second gas may be selected from air, or nitrogen, or helium, or mixture of other gases; and the mixture of the other gases, for example, may be a mixture of nitrogen and helium, etc.

In the embodiment of the present invention, a compressor known in the prior art may be adopted as the pneumatic compressor 2, and an aim of transferring the second gas in the low-pressure air container 12 into the high-pressure air container 11 is achieved by the compressor, while the specific structure and working principle of the compressor will not be further described herein. The pneumatic compressor 2 may realize an effect of storing mechanical energy in the paired compress gas energy storage device 1 in the form of paired compress gas energy.

In a selectable embodiment of the power device 3, the power device 3 may be a wind turbine 31, and the wind turbine 31 is connected with the rotating shaft 21 of the pneumatic compressor 2. The wind turbine 31 is used for driving the rotating shaft 21 of the pneumatic compressor 2 to rotate, so as to start the pneumatic cylinder 2 to work, and thus achieving the aim of transferring the second gas in the low-pressure air container 12 into the high-pressure air container 11. The wind turbine 31 may collect wind energy in the natural environment, for example, wind power on the land, on the water surface or in the air, and convert the wind energy into mechanical energy to be acted to the rotating shaft 21 of the pneumatic compressor 2.

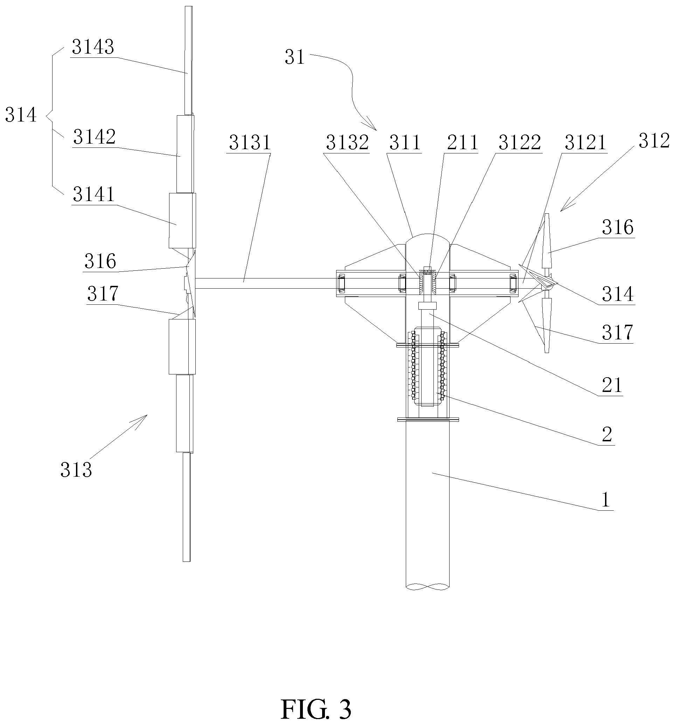

As shown in Fig. 3, the wind turbine 31 comprises a horizontal wind tower 311, a windward wind wheel 312 and a leeward wind wheel 313 are respectively provided at two sides of the horizontal wind tower 311, the paired compress gas energy storage device 1 is provided at the lower end of the horizontal wind tower 311, the pneumatic compressor 2 is located between the horizontal wind tower 311 and the paired compress gas energy storage device 1, and the windward wind wheel 312 and the leeward wind wheel 313 are respectively in drive connection with the rotating shaft 21 of the pneumatic compressor 2. By fixing the horizontal wind tower 311 on land; or placing the horizontal wind tower 311 on a floating object floating on the water surface; or fixing support pillars on land, the horizontal wind tower 311 is connected above the support pillars, so that the horizontal wind tower 311 is located in the air above the land, and the aim of collecting wind energy in the natural environment is achieved by using the windward wind wheel 312 and the leeward wind wheel 313. Communication electronics, power electronics and motor facilities do not need to be provided in the horizontal wind tower 311, and therefore, the construction cost of the horizontal wind tower 311 is low, the maintenance cost is more cost-effective, and system equipment is more durable; in addition, the horizontal wind tower 311 is actually of a hollow structure, the paired compress gas energy storage device 1 and the pneumatic compressor 2 are both located in a cylinder cavity at the lower end of the horizontal wind tower 311, and the hollow structure is capable of enabling the horizontal wind tower 311 to be located on a shaking plane, and thus being especially suitable for collecting wind energy in water floating type, deep sea and low-speed moving places and in the air; furthermore, due to the inherent hollow buoyancy characteristic of the horizontal wind tower 311, the horizontal wind tower 311 does not need to be fixedly supported on the underwater ground, and therefore, the underwater engineering construction cost, environment protection cost and operation and maintenance cost of the horizontal wind tower 311 are remarkably lowered, and influence to underwater environment is reduced.

In the implementation manner of the present invention, a distance between the leeward wind wheel 313 and the horizontal wind tower 311 is greater than a distance between the windward wind wheel 312 and the horizontal wind tower 311. Such setting has the advantage that the wind aligning torque force of the leeward wind wheel 313 is stronger than that of the windward wind wheel 312, so that the horizontal wind tower 311 acquires a capability of automatically aligning to wind or yawing, where the wind aligning torque force is wind power born by the leeward wind wheel 313 or the windward wind wheel 312 multiplied by a distance from respective wind wheels to the horizontal wind tower 311.

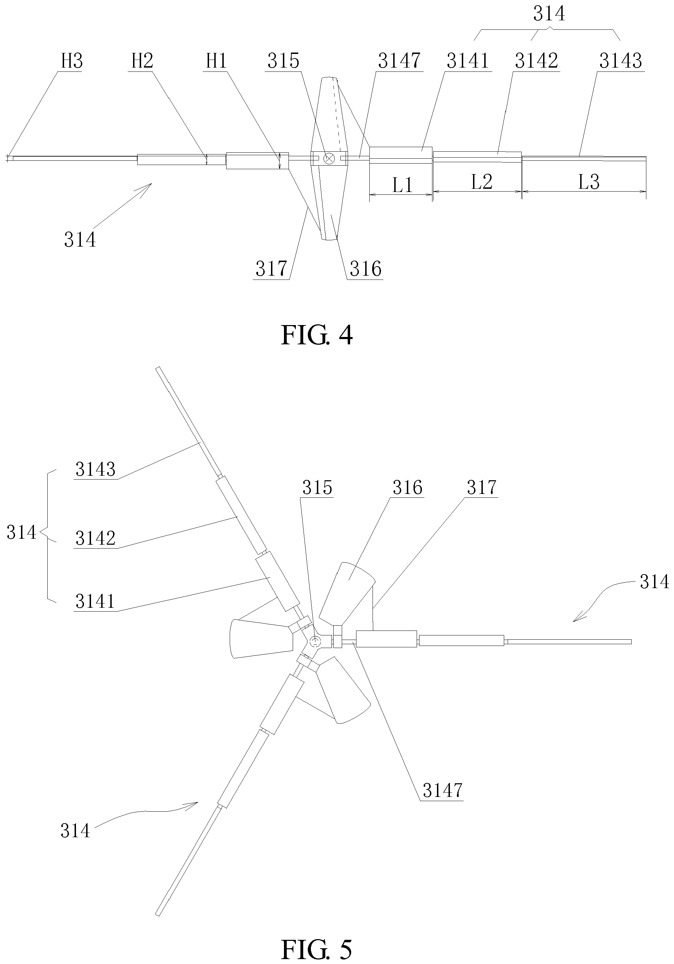

In the implementation manner of the present invention, the windward wind wheel 312 and the leeward wind wheel 313 both comprise a plurality of blades 314. Specifically, as shown in Fig. 4, in a feasible embodiment, the windward wind wheel 312 and the leeward wind wheel 313 respectively comprise two blades 314, and the two blades 314 are oppositely and radially arranged along the rotating center 315 (that is the aftermentioned windward wind wheel rotating shaft 3121 or leeward wind wheel rotating shaft 3131); of course, in another feasible embodiment, as shown in Fig. 5, the windward wind wheel 312 and the leeward wind wheel 313 also may respectively comprise three blades 314, and the tree blades 314 are arranged at equal intervals along the peripheral direction of the rotating center 315; or in other embodiments, the windward wind wheel 312 and the leeward wind wheel 313 may also respectively comprise four blades 314 or more blades 314, which is not limited here.

In the implementation manner of the present invention, in a feasible embodiment, each of the blades 314 comprises a plurality of sub-blades which are sequentially connected from inside to outside, the plurality of sub-blades are connected to a blade shaft 3147, the blade shaft 3147 is used for connecting the plurality of blades 314 to the aftermentioned windward wind wheel rotating shaft 3121 or leeward wind wheel rotating shaft 3131, and the plurality of blades 314 are designed to be of a segmented structure, thus saving the manufacture, transportation and maintenance cost of the blades; and in another feasbile embodiment, the plurality of blades 314 may also be integrally formed on the blade shaft 3147, which is not limited here.

Specifically, in a design scheme that the blades adopt a segmented structure, a first sub-blade 3141, a second sub-blade 3142 and a third sub-blade 3143 are sequentially connected from the inner edges of the plurality of blades 314 to the outer edges of the plurality of blades 314; of course, in other embodiments, the number of the plurality of sub-blades on each of the plurality of blades 314 may also be selected and set according to actual requirements, for example, each of the plurality of blades 314 comprises two sub-blades, or four sub-blades, or more sub-blades, which is not limited here.

Further, please refer to Fig. 4, the length of the sub-blade at the outer edge of the blade 314 is greater than the length of the sub-blade at the inner edge of the blade 314; and the thickness of the sub-blade at the outer edge of the blade 314 is smaller than the thickness of the sub-blade at the inner edge of the blade 314. Such design has the advantages that on one hand, blade segmentation is favorable for segmented maintenance according to requirement, instead of overall maintenance; and on the other hand, blades 314 of different sizes are adopted as the segmented blades, which is favorable for the overall mechanical loading of the blade 314, that is, when the load of a blade is constant, the overall length of the blade 314 may be extended by thinning and narrowing the sub-blade at the outer edge of the blade 314, so as to obtain a larger swept area.

Specifically, taking a condition that each blade 314 comprises three sub-blades an example, the length of the sub-blade at the outer edge of the blade 314 is the length L3 of the third sub-blade 3143, the length of the sub-blade at the inner edge of the blade 314 is the length L1 of the first sub-blade, that is the length L3 is greater than the length L1; in addition, the thickness of the sub-blade at the outer edge of the blade 314 is the thickness H3 of the third sub-blade 3143, the thickness of the sub-blade at the inner edge of the blade 314 is the thickness H1 of the first sub-blade 3141, that is, the thickness H3 is smaller than the thickness H1. In the embodiment as shown in Fig. 4, the length L3 of the third sub-blade 3143 is greater than the length L2 of the second sub-blade 3142, and the length L2 of the second sub-blade 3142 is greater than the length L1 of the first sub-blade 3141; the thickness H3 of the third sub-blade 3143 is smaller than the thickness H2 of the second sub-blade 3142, and the thickness H2 of the second sub-blade 3142 is smaller than the thickness H1 of the first sub-blade 3141. In a feasible embodiment, the total length (that is the sum of the length L1, the length L2 and the length L3) of the blade 314 is 0.3m∼50m.

In the implementation manner of the present invention, as shown in Fig. 3, the windward wind wheel 312 is in drive connection with the rotating shaft 21 of the pneumatic compressor 2 by the windward wind wheel rotating shaft 3121, the leeward wind wheel 313 is in drive connection with the rotating shaft 21 of the pneumatic compressor 2 by the leeward wind wheel rotating shaft 3131, the plurality of blades 314 of the windward wind wheel 312 are connected to the windward wind wheel rotating shaft 3121, and the plurality of blades 314 of the leeward wind wheel 313 are connected to the leeward wind wheel rotating shaft 3131.

Specifically, a bevel gear 211 is connected to the rotating shaft 21 of the pneumatic compressor 2, the bevel gear 211 is located in the horizontal wind tower 311, a windward wind wheel bevel gear 3122 is connected to one end, stretching into the horizontal wind tower 311, of the windward wind wheel rotating shaft 3121, the plurality of blades 314 of the windward wind wheel 312 are connected to the other end of the windward wind wheel rotating shaft 3121 by respective blade shafts 3147, a leeward wind wheel bevel gear 3132 is connected to one end, stretching into the horizontal wind tower 311, of the leeward wind wheel rotating shaft 3131, the plurality of blades 314 of the leeward wind wheel 313 are connected to the other end of the leeward wind wheel rotating shaft 3131 by respective blade shafts 3147, and the windward wind wheel bevel gear 3122 and the leeward wind wheel bevel gear 3132 are respectively in transmission connection with the bevel gear 211. Under the action of wind energy in the natural environment, the plurality of blades 314 of the windward wind wheel 312 and the plurality of blades 314 of the leeward wind wheel 313 rotate to drive the windward wind wheel rotating shaft 3121 and the leeward wind wheel rotating shaft 3131 to rotate, so that the bevel gear 211 connected to the rotating shaft 21 of the pneumatic compressor 2 rotates under the combined action of the windward wind wheel bevel gear 3122 and the leeward wind wheel bevel gear 3132, and the aim of driving the rotating shaft 21 of the pneumatic compressor 2 to rotate is achieved.

According to the present invention, in order to make the bevel gear 211 rotate toward one direction, the rotating directions of the windward wind wheel bevel gear 312 and the leeward wind wheel bevel gear 3132 are opposite, that is, the rotating direction of the plurality of blades 314 on the windward wind wheel 312 is opposite to the rotating direction of the plurality of blades 314 on the leeward wind wheel 313, and the windward wind wheel 312 and the leeward wind wheel 313 are in a counter rotating state. Such design has the following advantages: on one hand, the aim of making the rotating shaft 21 of the pneumatic compressor 2 rotate toward one direction is achieved; and on the other hand, when the wind turbine 31 is under the action of wind power, the windward wind wheel 312 and the leeward wind wheel 313 with opposite rotating directions may generate counter rotating torque relative to the horizontal wind tower 311, such counter rotating torque is favorable for promoting the synthesis torque of the windward wind wheel rotating shaft 3121 and the windward wind wheel rotating shaft 3131, and therefore, asymmetric acting force of the windward wind wheel 312 and the leeward wind wheel 313 to the horizontal wind tower 311 is eliminated, not only may wind energy utilization rate of the wind turbine 31 in unit swept area be increased, but also wind energy collection efficiency is increased; meanwhile, horizontal counter rotating torques generated by the windward wind wheel 312 and the leeward wind wheel 313 respectively are synthesized to be a single vertically downward torque at the top of the horizontal wind tower 311, so as to promote the start of the pneumatic compressor 2, and thus being favorable for converting wind energy into mechanical energy.

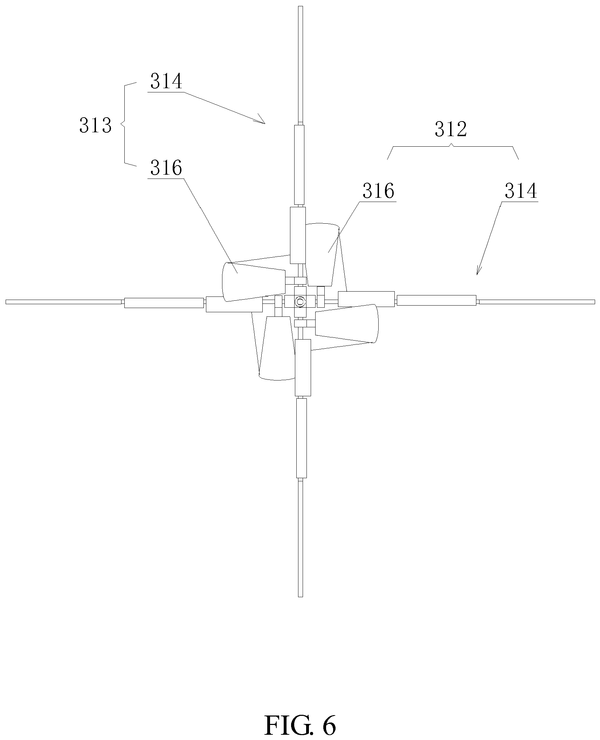

In the implementation manner of the present invention, observing from the left side or the right side of Fig. 3, the plurality of blades 314 of the windward wind wheel 312 and the plurality of blades 314 of the leeward wind wheel 313 are arranged in a staggered way along the peripheral direction of the windward wind wheel rotating shaft 3121 and the peripheral direction of the leeward wind wheel rotating shaft 3131. In the present embodiment, Fig. 6 is a view of the Fig. 3 observing from the left side, when the windward wind wheel 312 comprises two blades 314, and the leeward wind wheel 313 also comprises two blades 314, the two blades 314 of the windward wind wheel 312 are respectively arranged by staggering from the two blades 314 of the leeward wind wheel 313, that is, the blades are arranged in an orthogonal way by forming an angle of 90 degrees. Such setting has the advantage that wind aligning area shielding of the windward wind wheel 312 is minimum relative to the leeward wind wheel 313.

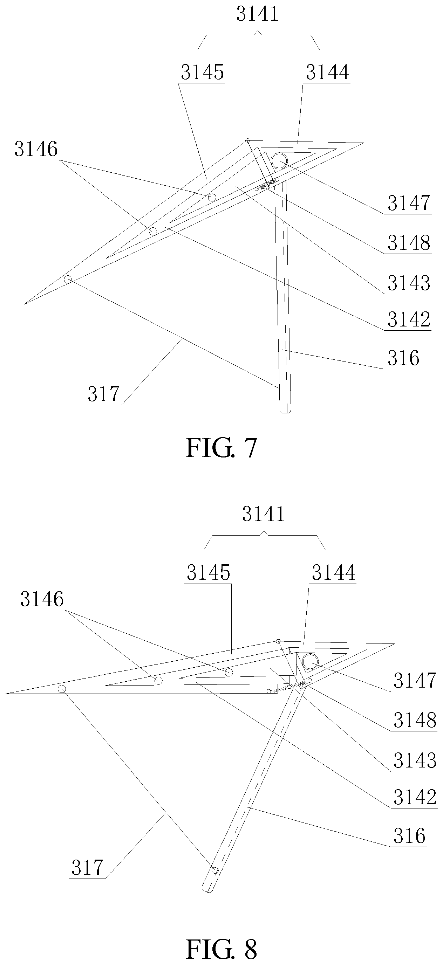

In the implementation manner of the present invention, as shown in Fig. 7, in an embodiment that each blade 314 is formed by splicing the plurality of sub-blades, each sub-blade in each blade 314 is formed by two rotatably connected windward blades 3144 and an angle blade 3145, where two angle blades 3145 of two adjacent sub-blades of each blade 314 are connected with each other by a connecting member 3146, and the windward blades 3144 of each sub-blade of each blade 314 is connected to respective blade shaft 3147. Each sub-blade is segmented into two windward blades 3144 with a certain connection relation mutually and an angle blade 3145, so as to be convenient for locally adjusting the windward angle of individual sub-blades in field according to the wind regime of a wind field, and in maintenance, the windward blades 3144 and/or the angle blade 3145 of individual sub-blades may be locally replaced, instead of replacing the whole blade of the wind wheel.

Specifically, taking a condition that each blade 314 in the present invention comprises a first sub-blade 3141, a second sub-blade 3142 and a third sub-blade 3143 as an example, in the present embodiment, the shape of cross section of each sub-blade of each blade 314 is approximately an obtuse triangle, and by making a vertical line towards the bottom edge by taking the obtuse angle of the obtuse triangle as a top point, blade bodies located at two sides of the vertical line are the windward blades 3144 and the angle blade 3145, and the windward blades 3144 and the angle blade 3145 are designed to be of mutually rotatable structures at the top point of the obtuse angle of the obtuse triangle, for example, the windward blades 3144 and the angle blade 3145 may be mutually rotatably connected by a hinge; further, elastic members 3148 are connected between the windward blades 3144 and the angle blades 3145, in the present embodiment, the elastic members 3148 are springs, the elastic members 3148 are located at the bottom edge of the obtuse triangle and used for elastically connecting the windward blades 3144 and the angle blades 3145, and in a specific embodiment, the angle blades 3145 can rotate by 0°∼30° relative to the windward blades 3144.

Please refer to Fig. 7 and Fig. 8, along a direction from the inner edge to the outer edge of each blade 314, the area of the cross section of each sub-blade in each blade 314 is gradually reduced, for example, in the present embodiment, the area of the cross section of the first sub-blade 3141 is greater than the area of the cross section of the second sub-blade 3142, and the area of the cross section of the second sub-blade 3142 is greater than the area of the cross section of the third sub-blade 3143. Such setting has the advantages that a production process with equal uniform section is adopted for each sub-blade, and therefore, the manufacture, transportation and maintenance cost of the blades is saved, and lift blade forming may be distinguished from exiting blade forming.

Further, in the implementation manner of the present invention, in a feasible embodiment, the windward wind wheel 312 and the leeward wind wheel 313 respectively comprise a plurality of adjusting blades 316, one adjusting blade 316 is provided between every two adjacent blades 314 of the windward wind wheel 312 and also between every two adjacent blades 314 of the leeward wind wheel 313, and a linkage member 317 is connected between each of the adjusting blades 316 and one blade 314 adjacent to the adjusting blade 316. These adjusting blades 316 may receive and sense wind power acting on the horizontal wind tower 311, and transfer this acting force to the angle blade 3145 of each blade 314 by the linkage members 317.

Specifically, each of the adjusting blades 316 is rotatably connected to the blade shaft 3147. This adjusting blade 316 is connected to the angle blade 3145 of each sub-blade at the inner edge of the blade 314 by the linkage member 317. As shown in Fig. 7 and Fig. 8, when the wind power is increased or rotating speed is raised, wind power received by the windward face of the adjusting blade 316 is increased accordingly, offset of the adjusting blade 316 along the wind power direction is increased, and the windward angle of the blade 314 is adjusted by utilizing the offset acting force. In order to achieve this arm, firstly, the adjusting blade 316 transfers the received wind power to the connected angle blade 3145 by the linkage member 317, so that the angle blade 3145 is stressed, and the angle blade 3145 rotates by a certain angle around the windward blade 3144, so as to realize linkage adjustment of the blade angle of the blade 314. According to the present invention, under the action of wind power of the natural environment, the angle blades 3145 of the plurality of blades 314 are driven to rotate by the plurality of adjusting blades 316, so as to automatically adjust the rotating speed of the plurality of blades 314 on the windward wind wheel 312 and the plurality of blades 314 on the leeward wind wheel 313 around the windward wind wheel rotating shaft 3121 and the leeward wind wheel rotating shaft 3131, and therefore, the self-start capacity at low wind speed and the autonomous sheltering capacity at a strong wind speed of the wind turbine 31 are promoted.

In another selectable embodiment of the power device 3, the power device 3 is the water floating machine 32, and the water floating machine 32 is connected with the rotating shaft 21 of the pneumatic compressor 2. The water floating machine 32 is used for driving the rotating shaft 21 of the pneumatic compressor 2 to rotate, so as to start the pneumatic compressor 2 to work, and achieve the aim of transferring the second gas in the low-pressure air container 12 into the high-pressure air container 11. The water floating machine 32 is capable of collecting ocean wave energy in the natural environment, for example, ocean wave energy on water or on the sea, and converting the ocean wave energy into mechanical energy to be acted to the rotating shaft 21 of the pneumatic compressor 2.

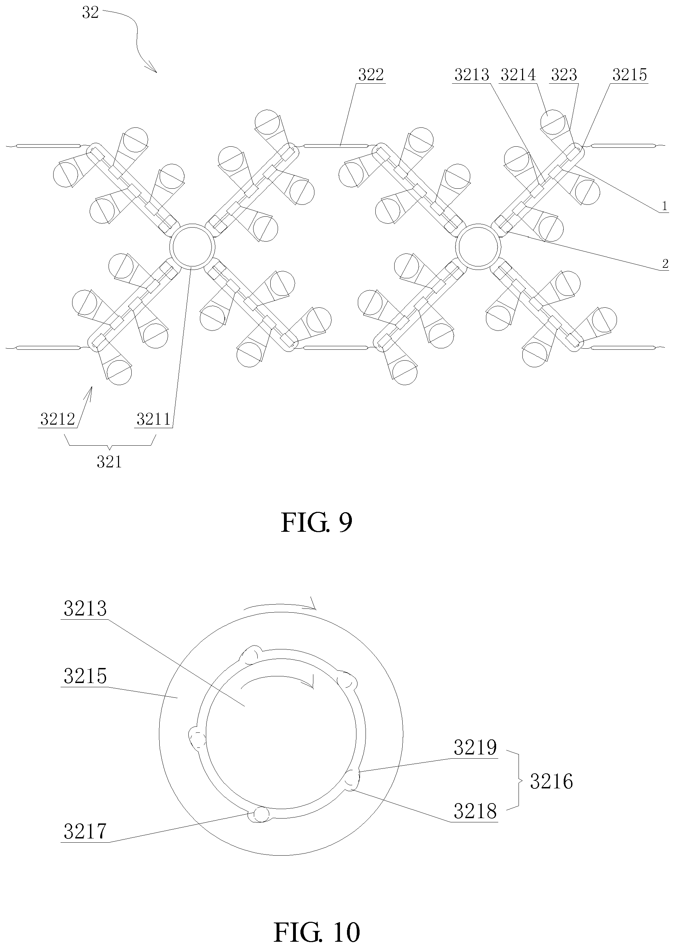

As shown in Fig. 9, the water floating machine 32 comprises a plurality of floating mechanisms 321, and the floating mechanisms 321 are connected by connecting members 322; in the present embodiment, the connecting members 322 are flexible rods made by adopting plastic, rubber, organic glass or synthetic fiber, and have certain hardness themselves, and in combination with certain flexible characteristic, a minimum relative distance is kept among the floating mechanisms 321. Each floating mechanism 321 comprises a fixed ring and a plurality of floating components 3212 connected to the fixed ring. By virtue of these floating mechanisms 321, the paired compress gas energy production system may be provided on water or on the sea, and energy generated by up and down surging of water waves is received and transferred by the plurality of floating components 3212.

Specifically, each floating component 3212 comprises a transmission main shaft 3213, a plurality of floating members 3214 are rotatably connected to the transmission main shaft 3213, and in a feasible embodiment, the plurality of floating members 3214 on each transmission main shaft 3213 are provided at two sides of the transmission main shaft 3213 in a staggered way along the axial direction of the transmission main shaft 3213, and therefore, the quantity of the floating members 3214 provided on each transmission main shaft 3213 may be increased, and the ocean wave energy may be connected maximally. The rotating shaft 21 of the pneumatic compressor 2 is connected with the transmission main shaft 3213, the paired compress gas energy storage device 1 is located below the transmission main shaft 3213, and the paired compress gas energy storage device 1 storing gas increases the floating capacity of the paired compress gas energy production system on a water surface or a sea surface.

Please refer to Fig. 10, a plurality of driving sleeves 3215 are sleeved on the transmission main shaft 3213 at intervals, the floating members 3214 are connected to the driving sleeves 3215 by a link mechanism 323, a plurality of driving grooves 3216 are formed in the inner peripheral walls of the driving sleeves 3215 along the peripheral direction, and rollers 3217 are provided in the driving grooves 3216. These driving sleeves 3215 are used for driving the transmission main shaft 3213 to rotate, so as to achieve the aim of driving the rotating shaft 21 of the pneumatic compressor 2 to rotate.

In the present invention, the driving grooves 3216 are wedge grooves, the driving groove 3216 are in stripe shape along the axial direction of the driving sleeves 3215, the shape of the cross sections of the driving grooves is wedge, each of the wedge grooves comprises a deep end 3218 and a shallow end 3219, the groove depth of the deep end 3218 is greater than the groove depth of the shallow end 3219; the rollers 3217 are approximately in cylinder rod shape, and the diameter of the rollers 3217 is equivalent to the groove depth of the deep ends 3218 of the wedge-grooves, so that when the rollers 3217 are located at the deep ends of the wedge grooves, the rollers 3217 cannot protrude out of the inner peripheral walls of the driving sleeves 3215, and therefore, in a state that the rollers 3217 are located at the deep ends 3218 of the wedge grooves, the rollers 3217 are separated from the transmission main shaft 3213, at the moment, the driving sleeves 3215 do not possess the capacity of driving the transmission main shaft 3213; and in a state that the rollers 3217 are located at the shallow ends 3219 of the wedge grooves, each roller 3217 protrudes out of the inner peripheral walls of the driving sleeves 3215, the rollers 3217 are in contact with the transmission main shaft 3219, and then the driving sleeves 3215 are capable of driving the transmission main shaft 3213 to rotate.

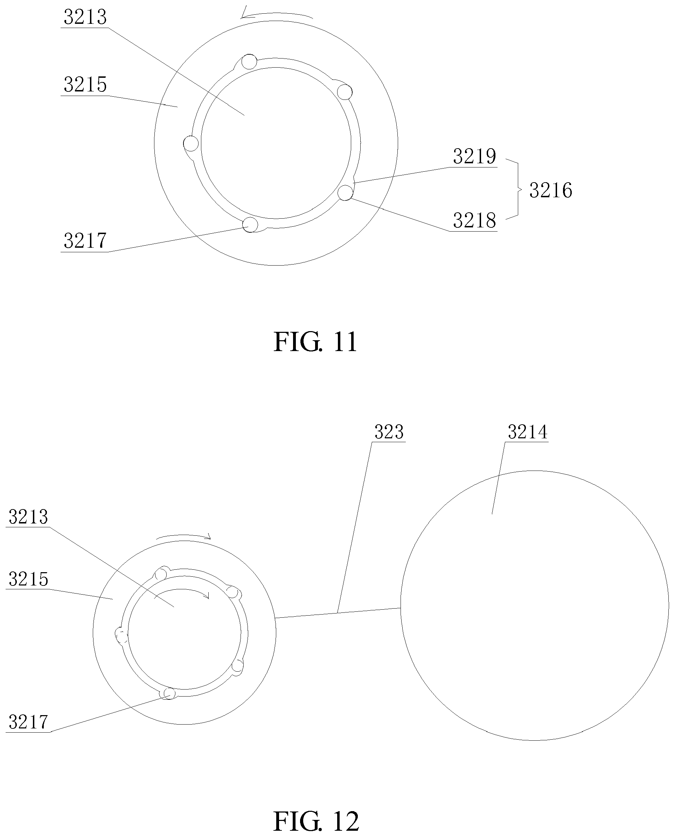

That is, assuming that the pneumatic compressor 2 may be started only when the transmission main shaft 3213 rotates clockwise, at the moment, as shown in Fig. 10, when the driving sleeves 3215 rotate clockwise, the rollers 3217 are pushed to the shallow ends 3219 of the driving grooves 3216, so as to achieve the aim of driving the transmission main shaft 3213 to rotate clockwise; as shown in Fig. 11, when the driving sleeves 3215 rotate anticlockwise, the rollers 3217 are pushed to the deep ends 3218 of the driving grooves 3216, and the rollers 3217 retract into the driving grooves 3216 to be separated from the transmission main shaft 3213, at the moment, the driving sleeves 3215 cannot drive the transmission main shaft 3213 to rotate. That is, the transmission main shaft 3213 may be driven to rotate only when the rotating direction of the driving sleeves 3215 is consistent to that of the transmission main shaft 3213, while the driving sleeves 3215 cannot drive the transmission main shaft 3213 to rotate when the rotating direction of the driving sleeves 3215 is opposite to that of the transmission main shaft 3213.

Please refer to Fig. 12, when the floating members 3214 float on the water surface or the sea surface, the floating members will drift up and down along with up and down surging of sea waves, at the moment, the movement of the floating members 3214 will be transferred to the driving sleeves 3215 by the link mechanism 323; when the driving sleeves 3215 rotate oppositely relative to the transmission main shaft 3213, the driving sleeve 3215 will not drive the transmission main shaft 3213 to rotate; and when the driving sleeves 3215 rotate to the same direction relative to the transmission main shaft 3213, the driving sleeve 3215 is capable of driving the transmission main shaft 3213 to rotate. Therefore, when the plurality of floating members 3214 are respectively provided at two sides of the axial direction of the transmission main shaft 3213, along with up and down surging of the sea waves, different floating members 3214 will drive respective driving sleeves 3215 to generate different rotating directions, while only when the rotating direction of the driving sleeves 3215 is consistent to the rotating direction of the transmission main shaft 3213, the transmission main shaft 3213 may be driven to rotate, that is, the deep ends 3218 and the shallow ends 3219 of respective driving grooves 3216 of two adjacent driving sleeves 3215 are configured to be opposite.

In the embodiment of the present invention, the floating members 3214 are spheres with cavities, of course, in other embodiments, the floating members 3214 may also be cylinders with cavities, for example, a buoy structure, etc., which is not limited here; the only requirement is that the floating members 3214 may be placed on the sea or on water to float on the sea surface or the water surface. Further, the link mechanism 323 is a plurality of connecting rods connected between the floating members 3214 and the driving sleeves 3215.

In further another selectable embodiment of the power device 3, the power device 3 is a vertical water turbine 33, and the vertical water turbine 33 is connected with the rotating shaft 21 of the pneumatic compressor 2. The vertical water turbine 22 is used for driving the rotating shaft 21 of the pneumatic compressor 2 to rotate, so as to start the pneumatic compressor 2 to work, and achieve the aim of transferring the second gas in the low-pressure air container 12 into the high-pressure air container 11. The vertical water turbine 33 is capable of collecting water flow energy in the natural environment, for example, underwater or undersea ocean current energy, and converting the water flow energy into mechanical energy to be acted to the rotating shaft 21 of the pneumatic compressor 2.

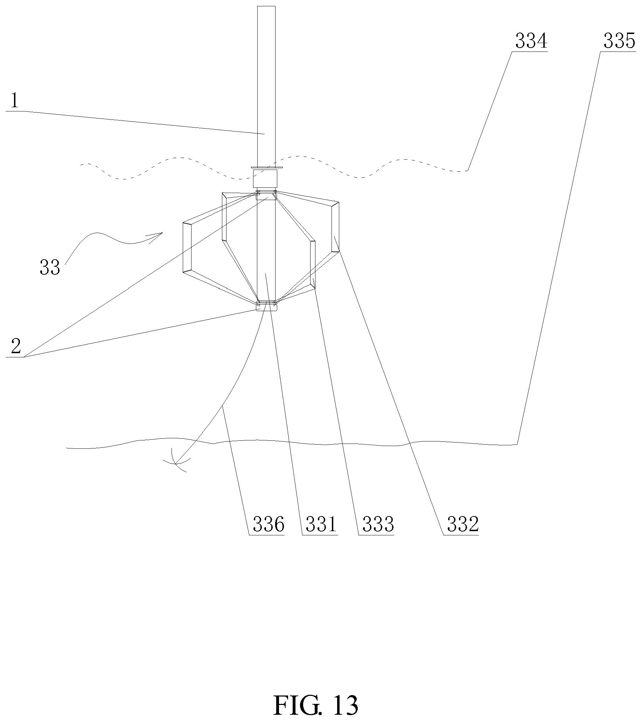

As shown in Fig. 13, the vertical water turbine 33 is located underwater or undersea, that is the vertical water turbine 33 is placed under the water surface or the sea surface 334 and located above the bottom 335 of the water bottom or seabed, the vertical water turbine 33 comprises a water turbine shaft 331, the paired compress gas energy storage device 1 is located above the water turbine shaft 331, the pneumatic compressor 2 is located between the water turbine shaft 331 and the paired compress gas energy storage device 1, the plurality of first movable blades 332 are connected to the water turbine shaft 331 along the peripheral direction, one ends of the first movable blades 332 are rotatably connected with the water turbine shaft 331, for example, being rotatably connected with the water turbine shaft 331 by a connecting ring sleeved on the water turbine shaft 331, and the other ends of the first movable blades are connected with the rotating shaft 21 of the pneumatic compressor 2. Under the action of underwater or undersea water flow energy, the the plurality of first movable blades 332 rotate around the water turbine shaft 331, so as to drive the rotating shaft 21 of the pneumatic compressor 2 to rotate to start the pneumatic compressor 2 to work. In the present invention, the vertical water turbine 33 may be fixed to the bottom 335 of the water bottom or the seabed by a flexible cable 336, so as to limit the floating scope of the vertical water turbine 33; in addition, the water turbine shaft 331 of the vertical water turbine 33 is of a hollow structure actually, the paired compress gas energy storage device 1 and the pneumatic compressor 2 are both located in a cylinder cavity at the upper end of the water turbine shaft 331, and the water turbine shaft 331 of the hollow structure may make the vertical water turbine 33 be suitable for collecting water flow energy in floating type, deep sea and low-speed moving places; furthermore, due to the inherent hollow buoyancy characteristic of the water turbine shaft 331, the water turbine shaft 331 does not need to be fixedly supported on the underwater ground, and just needs to be fixed by the flexible cable 336, and therefore, the underwater engineering construction cost, environment protection cost and operation and maintenance cost of the water turbine shaft 331 are remarkably lowered, and influence to underwater environment is reduced.

Further, the plurality of second movable blades 333 are also connected to the water turbine shaft 331 along the peripheral direction, the rotating directions of the second movable blades 333 along the water turbine shaft 331 are opposite to the rotating directions of the first movable blades 332 along the water turbine shaft 331, one ends of the second movable blades 333 are rotatably connected with the water turbine shaft 331, for example, being rotatably connected with the water turbine shaft 331 by the connecting ring sleeved on the water turbine shaft 331, and the other ends of the second movable blades 333 are connected with the rotating shaft 21 of another pneumatic compressor 2 connected to the water turbine shaft 331. For the vertical water turbine 33, a scheme of reciprocal rotation of the plurality of first movable blades 332 and the plurality of second movable blades 333 is adopted, so as to mutually offset axial torsion to the water turbine shaft 331, and therefore, adverse effect of the vertical water turbine 33 on the paired compress gas energy storage device 1 arranged above is eliminated; in addition, by adopting two pneumatic compressors 2, the second gas in the low-pressure air container 12 of the paired compress gas energy storage device 1 is more rapidly transferred into the high-pressure air container 11, and therefore, the working efficiency of the paired compress gas energy production system is increased.

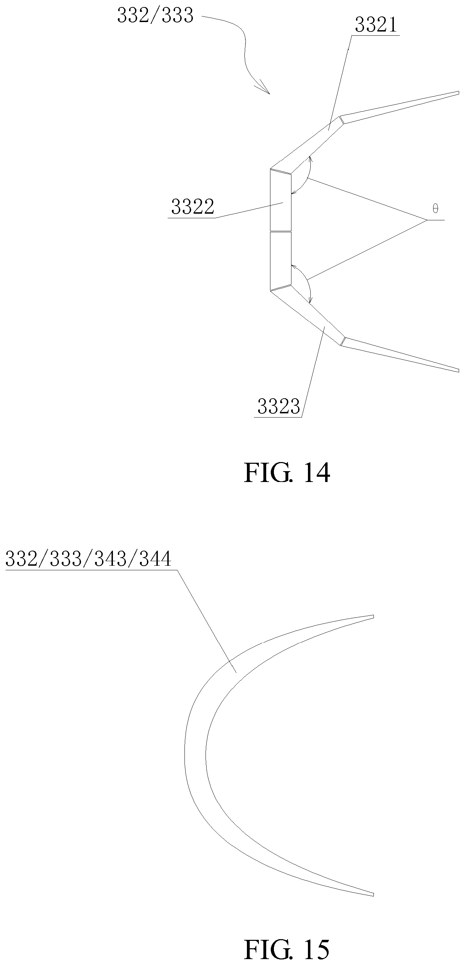

In the implementation manner of the present invention, in a feasible embodiment, as shown in Fig. 14, the first movable blades 332 and the second movable blades 333 are all formed by splicing the plurality of sub-blades. The first movable blades 332 and the second movable blades 333 of the vertical water turbine 33 respectively adopt a structure of segmented sub-blades, so as to lower the manufacture, installation and maintenance cost of the blades.

Specifically, the first movable blades 332 and the second movable blades 333 in the present embodiment are respectively formed by sequentially connecting an upper sub-blade 3321, a side sub-blade 3322 and a lower sub-blade 3323, where an included angle θ between two adjacent sub-blades is 90°-180°, that is, an included angle θ between the upper sub-blade 3321 and the side sub-blade 3322 is 90°-180°, and an included angle θ between the side sub-blade 3322 and the lower sub-blade 3323 is 90°-180°.

In another feasible embodiment, as shown in Fig. 15, the first movable blades 332 and the second movable blades 333 are all arc-shaped blades, that is the first movable blades 332 and the second movable blades 333 may also be integrally formed and designed, which is not limited here.

In the implementation manner of the present invention, the shapes of cross sections of the first movable blades 332 and the second movable blades 333 are all triangular or fusiform, so as to reduce the resistance of retrogressive water flow. When the shapes of cross sections of the first movable blades 332 and the second movable blades 333 are triangle, this triangle is an obtuse triangle.

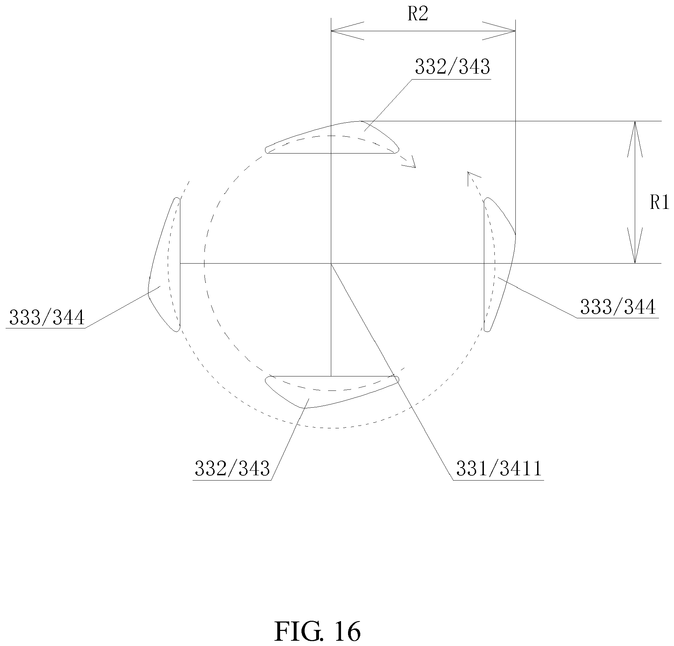

In the present invention, because the rotating direction of the second movable blades 333 along the water turbine shaft 331 is opposite to the rotating direction of the first movable blades 332 along the water turbine shaft 331, the outer diameter R1 of the first movable blades 332 needs to be designed to be smaller than the outer diameter R2 of the second movable blades 333. Please refer to Fig. 16, when the first movable blades 332 rotate clockwise along the water turbine shaft 331, the second movable blades 333 rotate anticlockwise along the water turbine shaft 331, and the short edge direction of the triangular cross sections of the first movable blades 332 is just opposite to the short edge direction of the triangular cross sections of the second movable blades 333, that is because under the action of water flow, by taking the water turbine shaft 331 as a pivot, blades of this form integrally move towards the short edge direction of the obtuse triangle naturally, so as to ensure that under the action of the ocean current energy, the rotating direction of the second movable blades 333 is opposite to the rotating direction of the first movable blades 332.

In a yet another selectable embodiment of the power device, the power device is a hovering copter 34, and the hovering copter 34 is connected with the rotating shaft 21 of the pneumatic compressor 2. The hovering copter 34 is used for driving the rotating shaft 21 of the pneumatic compressor 2 to rotate, so as to start the pneumatic compressor 2 to work, and achieve the aim of transferring the second gas in the low-pressure air container 12 into the high-pressure air container 11. The hovering copter 34 is capable of collecting wind energy in the natural environment, for example, wind power on the land, on the water surface or in the air, and converting the wind energy into mechanical energy to be acted to the rotating shaft 21 of the pneumatic compressor 2.

The hovering copter 34 comprises a vertical wind turbine 341 and a plurality of propeller wings 342 connected to the upper side of the vertical wind turbine 341, the vertical wind turbine 341 comprises a main shaft 3411, the pneumatic compressor 2 is connected between the mains shaft 3411 and the propeller wings 342, the paired compress gas energy storage device 1 is sleeved on the main shaft 3411, the plurality of first movable blades 343 are connected to the main shaft 3411 along the peripheral direction, one ends of the first movable blades 343 are rotatably connected with the main shaft 3411, for example being rotataly connected with the mains haft 3411 by a connecting ring sleeved on the main shaft 3411, and the other ends of the first movable blades 343 are connected with the rotating shaft 21 of the pneumatic compressor 2. Under the action of wind energy in the air, the plurality of first movable blades 343 rotate around the main shaft 3411, so as to drive the rotating shaft 21 of the pneumatic compressor 2 to rotate, to start the pneumatic compressor 2 to work.

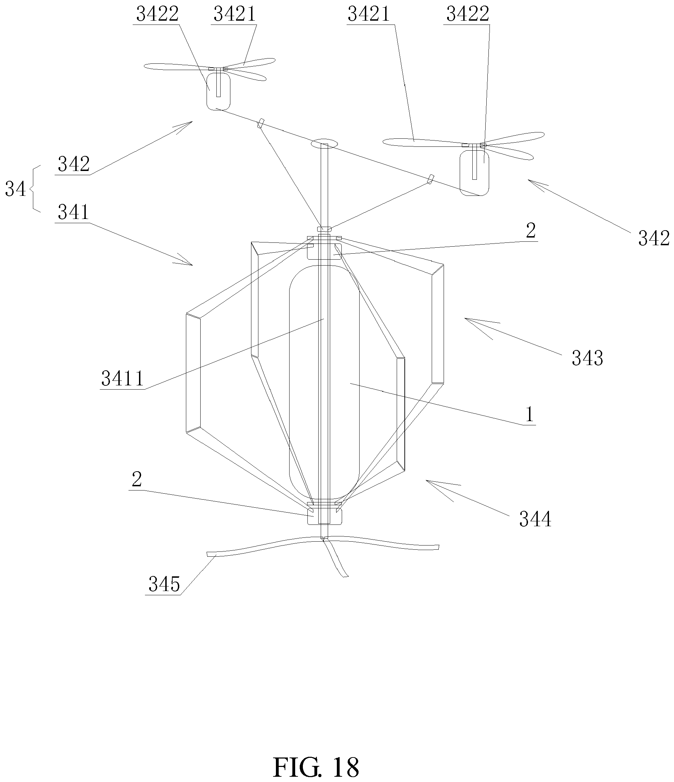

Further, please refer to Fig. 18, the plurality of second movable blades 344 are also connected to the main shaft 3411 along the peripheral direction, the rotating direction of the second movable blades 344 along the main shaft 3411 are opposite to the rotating direction of the first movable blades 343 along the main shaft 3411, one ends of the second movable blades 344 are rotatably connected with the main shaft 3411, for example being rotatably connected with the mains haft 3411 by a connecting ring sleeved on the main shaft 3411, and the other ends of the second movable blades 344 are connected with the rotating shaft 21 of another pneumatic compressor 2 connected to the main shaft 3411. For the vertical wind turbine 341, a scheme of reciprocal rotation of the plurality of first movable blades 343 and the plurality of second movable blades 344 is adopted, so as to mutually offset axial torsion to the main shaft 3411, and therefore, adverse effect of the vertical water turbine 341 on the paired compress gas energy storage device 1 arranged thereon and the plurality of propeller wings 342 is eliminated; in addition, by adopting two pneumatic compressors 2, the second gas in the low-pressure air container 12 of the paired compress gas energy storage device 1 is more rapidly transferred into the high-pressure air container 11, and therefore, the working efficiency of the paired compress gas energy production system is increased.

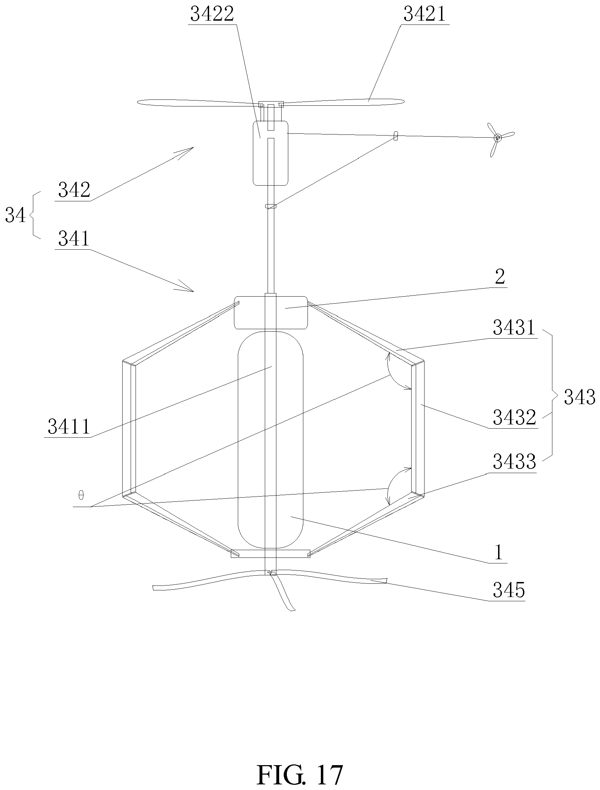

Specifically, in the embodiment as shown in Fig. 17, the hovering copter 34 is a single rotary wing type copter, and comprises one propeller wing 342, of course, in other embodiments, two or more propeller wings 342 may be connected above the vertical wind turbine 341, which is not limited here. Each of the propeller wings 342 is formed by the plurality of blades 3421 and an engine 3422 driving the the plurality of blades 3421 to rotate, the plurality of first movable blades 343 are connected to the main shaft 3411 of the hovering copter 34, and in the present embodiment, two first movable blades 343 are provided, and the two first movable blades 343 are oppositely arranged along the radial direction of the main shaft 3411; of course, in other embodiment, three, four or more first movable blades 343 may be provided, which is not limited here. In the embodiment as shown in Fig. 18, the hovering copter 34 is a double rotary wing type copter, and comprises two propeller wings 342, each of the propeller wings 2 is formed by the plurality of blades 3421 and an engine 3422 driving the the plurality of blades 3421 to rotate, the plurality of first movable blades 343 and the plurality of second movable blades 344 are connected to the main shaft 3411 of the hovering copter 34, and in the present embodiment, two first movable blades 343 and two second movable blades 344 are provided, and the two first movable blades 343 and the two second movable blades 344 are oppositely arranged along the radial direction of the main shaft 3411.

For the hovering copter 34, the aim of ascending the vertical wind turbine 341 to the air and hovering in the air is achieved by a plurality of propeller wings 342, and then under the action of wind energy in the natural environment, the first movable blades 343 and/or the second movable blades 344 will rotate along the main shaft 3411, so as to drive the rotating shaft 21 of the pneumatic compressor 2 to rotate, and achieve the aim of collecting wind energy and converting the wind energy into mechanical energy.

In the implementation manner of the present invention, in a feasible embodiment, the first movable blades 332 and the second movable blades 333 are all formed by splicing a plurality of sub-blades. The first movable blades 343 and the second movable blades 344 of the vertical water turbine 341 respectively adopt a structure of segmented sub-blades, so as to lower the manufacture, installation and maintenance cost of the blades.

Specifically, the first movable blades 343 and the second movable blades 344 in the present embodiment are respectively formed by sequentially connecting an upper sub-blade 3431, a side sub-blade 3432 and a lower sub-blade 3433, where an included angle θ between two adjacent sub-blades is 90°-180°, that is, an included angle θ between the upper sub-blade 3431 and the side sub-blade 3432 is 90°-180°, and an included angle θ between the side sub-blade 3432 and the lower sub-blade 3433 is 90°-180°.

In another feasible embodiment, refer to Fig. 15, the first movable blades 343 and the second movable blades 344 are all arc-shaped blades, that is the first movable blades 343 and the second movable blades 344 may also be integrally formed and designed, which is not limited here.

In the implementation manner of the present invention, the shapes of cross sections of the first movable blades 343 and the second movable blades 344 are all triangular or fusiform, so as to reduce the resistance of retrogressive water flow. When the shapes of cross sections of the first movable blades 343 and the second movable blades 344 are triangle, this triangle is an obtuse triangle.

In the present invention, because the rotating direction of the second movable blades 344 along the main shaft 3411 is opposite to the rotating direction of the first movable blades 343 along the main shaft 3411, the outer diameter R1 of the first movable blades 343 needs to be designed to be smaller than the outer diameter R2 of the second movable blades 344. Please refer to Fig. 16, when the first movable blades 343 rotate clockwise along the main shaft 3411, the second movable blades 344 rotate anticlockwise along the main shaft 3411, and the short edge direction of the triangular cross sections of the first movable blades 343 is just opposite to the short edge direction of the triangular cross sections of the second movable blades 344, that is because under the action of wind power, by taking the main shaft 3411 as a pivot, blades of this form integrally move towards the short edge direction of the obtuse triangle naturally, so as to ensure that under the action of the wind energy, the rotating direction of the second movable blades 344 is opposite to the rotating direction of the first movable blades 343.

In the implementation manner of the present invention, a landing frame 345 is connected to the lower end of the main shaft 3411, so that the hovering coper 34 is buffered while landing.

In an implementation manner of the present invention, as shown in Fig. 9, the wind turbine 31, the water floating machine 32 and the water turbine 33 may be combined together to use, specifically, a lower end cylinder of the horizontal wind tower 311 of the wind turbine 31 and an upper end cylinder of the water turbine shaft 331 of the water turbine 33 are jointly connected to the fixed ring 3211 of the water floating machine 32, so as to achieve the aims of collecting wind energy, ocean wave energy and water flow energy. In addition, a solar photovoltaic panel may also be connected to the lower end cylinder of the horizontal wind tower 311 of the wind turbine 31, so as to collect solar energy.

The invention also provides a paired compress gas energy production method, comprising the steps of: providing a high-pressure air container 11 filled with first gas and a low-pressure air container 12 filled with second gas, transferring the second gas in the low-pressure air container 12 into the high-pressure air container 11, and forming compress gas difference capable of reflecting paired compress gas energy between the low-pressure air container 12 and the high-pressure air container 11.

The method is implemented by adopting the abovementioned paired compress gas energy production system, and the specific structure, working principle and beneficial effects of the paired compress gas energy production system are the same as the abovementioned implementation manners, and are not further described herein.

It should be noted at last that, the abovementioned embodiments are only used for describing the technical scheme of the present invention instead of limiting, although detailed descriptions are made by referring to preferred embodiments, it should be understood that a person of ordinary skill in the art may perform modification or equivalent replacement on the technical scheme of the present invention, without departing from the aim and scope of the technical scheme of the present invention, and all of the them should be covered in the scope of claims of the present invention.

## Claims

**1.** A paired compress gas energy production system, comprising:
a paired compress gas energy storage device comprising a high-pressure air container and a low-pressure air container; wherein the high-pressure air container is filled with first gas; and the low-pressure air container is filled with second gas;
a pneumatic compressor connected with the high-pressure air container and the low-pressure air container, respectively; wherein the pneumatic compressor is used for transferring the second gas in the low-pressure air container into the high-pressure air container; a paired compress gas energy difference is formed between the high-pressure air container and the low-pressure air container; and a paired compress gas energy is formed in the paired compress gas energy storage device; and
a power device connected with a rotating shaft of the pneumatic compressor and used for driving the rotating shaft of the pneumatic compressor to rotate.

**2.** The paired compress gas energy production system according to claim 1, wherein the power device comprises a wind turbine, a water floating machine and a vertical water turbine which are connected in sequence.

**3.** The paired compress gas energy production system according to claim 1, wherein the power device is the wind turbine; and the wind turbine is connected with the rotating shaft of the pneumatic compressor.

**4.** The paired compress gas energy production system according to claim 2 or 3, wherein the wind turbine comprises a horizontal wind tower; a windward wind wheel and a leeward wind wheel are respectively provided at two sides of the horizontal wind tower; the paired compress gas energy storage device is provided at the lower end of the horizontal wind tower; the pneumatic compressor is located between the horizontal wind tower and the paired compress gas energy storage device; and the windward wind wheel and the leeward wind wheel are respectively in drive connection with the rotating shaft of the pneumatic compressor.

**5.** The paired compress gas energy production system according to claim 4, wherein a distance between the leeward wind wheel and the horizontal wind tower is greater than a distance between the windward wind wheel and the horizontal wind tower.

**6.** The paired compress gas energy production system according to claim 4 or 5, wherein the windward wind wheel and the leeward wind wheel comprise a plurality of blades, respectively.

**7.** The paired compress gas energy production system according to claim 6, wherein each of the plurality of blades comprises a plurality of sub-blades sequentially connected from inside to outside; and the plurality of sub-blades are connected to a blade shaft.

**8.** The paired compress gas energy production system according to claim 7, wherein lengths of the plurality of sub-blades at outer edges of the plurality of blades are greater than lengths of the plurality of sub-blades at inner edges of the plurality of blades; and thicknesses of the plurality of sub-blades at the outer edges of the plurality of blades are smaller than thicknesses of the plurality of sub-blades at the inner edges of the plurality of blades.; the windward wind wheel is in drive connection with the rotating shaft of the pneumatic compressor by a windward wind wheel rotating shaft; the leeward wind wheel is in drive connection with the rotating shaft of the pneumatic compressor by a leeward wind wheel rotating shaft; a plurality of blades of the windward wind wheel are connected to the windward wind wheel rotating shaft; and a plurality of blades of the leeward wind wheel are connected to the leeward wind wheel rotating shaft.bladesblades

**10.** The paired compress gas energy production system according to claim 9, wherein a bevel gear is connected to the rotating shaft of the pneumatic compressor; the bevel gear is located in the horizontal wind tower; an windward wind wheel bevel gear is connected to one end, stretching into the horizontal wind tower, of the windward wind wheel rotating shaft; a leeward wind wheel bevel gear is connected to one end, stretching into the horizontal wind tower, of the leeward wind wheel rotating shaft; and the windward wind wheel bevel gear and the leeward wind wheel bevel gear are respectively in transmission connection with the bevel gear.

**11.** The paired compress gas energy production system according to claim 7, wherein each of the plurality of sub-blades is formed by two rotatably connected windward blades and angle blades; each of the windward blades of each of the plurality of sub-vanes of each of the plurality of vanes is connected to the blade shaft; and two angle blades of the two adjacent sub-blades of each of the plurality of blades are connected with each other.

**12.** The paired compress gas energy production system according to claim 11, wherein elastic members are connected between the windward blades and the angle blades.

**13.** The paired compress gas energy production system according to claim 11, wherein a plurality of adjusting blades are provided on the windward wind wheel and the leeward wind wheel, respectively; one of the plurality of adjusting blades is provided between every two adjacent blades of the windward wind wheel and also between every two adjacent blades of the leeward wind wheel, respectively; and a linkage member is connected between each of the plurality of adjusting blades and one of the plurality of blades adjacent to the same.

**14.** The paired compress gas energy production system according to claim 13, wherein each of the plurality of adjusting blades is axially and rotatably connected to the blade shaft.

**15.** The paired compress gas energy production system according to claim 14, wherein each of the plurality of adjusting blades is connected to the angle blades of the plurality of sub-blades at the inner edge of each of the plurality of blades by the linkage member.

**16.** The paired compress gas energy production system according to claim 9, wherein along the peripheral direction of the windward wind wheel rotating shaft and the peripheral direction of the leeward wind wheel rotating shaft, the plurality of vanes of the windward wind wheel and the plurality of vanes of the leeward wind wheel are arranged in a staggered way.

**17.** The paired compress gas energy production system according to claim 1, wherein the power device is the water floating machine; and the water floating machine is connected with the rotating shaft of the pneumatic compressor.

**18.** The paired compress gas energy production system according to claim 2 or 17, wherein the water floating machine comprises a plurality of floating mechanisms; the floating mechanisms are connected by connecting members; and each of the floating mechanisms comprises a fixed ring and a plurality of floating components connected to the fixed ring.

**19.** The paired compress gas energy production system according to claim 18, wherein each of the floating components comprises a transmission main shaft; a plurality of floating members are rotatably connected to the transmission main shaft; the rotating shaft of the pneumatic compressor is connected with the transmission main shaft; and the paired compress gas energy storage device is located below the transmission main shaft.

**20.** The paired compress gas energy production system according to claim 19, wherein a plurality of driving sleeves are sleeved on the transmission main shaft at intervals; the plurality of floating members are connected to the plurality of driving sleeves by a link mechanism; a plurality of driving grooves are formed in inner peripheral walls of the plurality of driving sleeves along the peripheral direction; and rollers are arranged in the plurality of driving grooves.

**21.** The paired compress gas energy production system according to claim 20, wherein the plurality of driving grooves are wedge grooves; each of the wedge grooves comprises a deep end and a shallow end; a groove depth of the deep end is greater than a groove depth of the shallow end; in a state that the rollers are located at the deep end of each of the wedge grooves, the rollers are separated from the transmission main shaft; and in a state that the rollers are located at the shallow end of each of the wedge grooves, the rollers are in contact with the transmission main shaft; and the plurality of driving sleeves drive the transmission main shaft to rotate.

**22.** The paired compress gas energy production system according to claim 19, wherein the plurality of floating members are spheres or cylinders with cavities.

**23.** The paired compress gas energy production system according to claim 20, wherein the link mechanism is a plurality of connecting rods connected between the plurality of floating members and the plurality of driving sleeves.

**24.** The paired compress gas energy production system according to claim 19, wherein the plurality of floating members on the transmission main shaft are provided at two sides of the transmission main shaft in a staggered way along an axial direction of the transmission main shaft.

**25.** The paired compress gas energy production system according to claim 1, wherein the power device is the vertical water turbine; and the vertical water turbine is connected with the rotating shaft of the pneumatic compressor.

**26.** The paired compress gas energy production system according to claim 2 or 25, wherein the vertical water turbine comprises a water turbine shaft; the paired compress gas energy storage device is located above the water turbine shaft; the pneumatic compressor is located between the water turbine shaft and the paired compress gas energy storage device; a plurality of first movable blades are connected to the water turbine shaft along the peripheral direction; one end of each of the plurality of first movable blades is rotatably connected with the water turbine shaft; and the other end thereof is connected with the rotating shaft of the pneumatic compressor.

**27.** The paired compress gas energy production system according to claim 26, wherein a plurality of second movable blades are also connected to the water turbine shaft along the peripheral direction; the rotating direction of the second movable blades along the water turbine shaft is opposite to the rotating direction of the first movable blades along the water turbine shaft; one end of each of the plurality of second movable blades are rotatably connected with the water turbine shaft; and the other end thereof is connected with the rotating shaft of another pneumatic compressor connected to the water turbine shaft.

**28.** The paired compress gas energy production system according to claim 27, wherein the plurality of first movable vanes and the plurality of second movable vanes are all formed by the plurality of sub-vanes by splicing.

**29.** The paired compress gas energy production system according to claim 28, wherein each of the plurality of first movable blades and each of the plurality of second movable blades comprise an upper movable blade, a side movable blade and a lower movable blade respectively, which are connected in sequence.

**30.** The paired compress gas energy production system according to claim 29, wherein an included angle between the upper movable blade and the side movable blade is 90°-180°; and an included angle between the side movable blade and the lower movable blade is 90°-180°.

**31.** The paired compress gas energy production system according to claim 27, wherein a shape of the cross section of each of the plurality of first movable blades and a shape of the cross section of each of the plurality of second movable blades are all triangle or fusiform.

**32.** The paired compress gas energy production system according to claim 27, wherein outer diameters of the plurality of first is smaller than outer diameters of the plurality of second.

**33.** The paired compress gas energy production system according to claim 27, wherein the plurality of first movable blades and the plurality of second movable blades are all arc-shaped blades.

**34.** The paired compress gas energy production system according to claim 1, wherein the power device is a hovering copter; and the hovering copter is connected with the rotating shaft of the pneumatic compressor.

**35.** The paired compress gas energy production system according to claim 34, wherein the hovering copter comprises a vertical wind turbine and a plurality of propeller wings connected to an upper side of the vertical wind turbine; the vertical wind turbine comprises a main shaft; the pneumatic compressor is connected between the main shaft and the propeller wings; the paired compress gas energy storage device is sleeved on the main shaft; the plurality of first movable blades are connected to the main shaft along the peripheral direction; one end of each of the plurality of first movable blades is rotatably connected with the main shaft; and the other end thereof is connected with the rotating shaft of the pneumatic compressor.

**36.** The paired compress gas energy production system according to claim 35, wherein the plurality of second movable blades are also connected to the main shaft along the peripheral direction; the rotating direction of the plurality of second movable blades along the main shaft is opposite to the rotating direction of the plurality of first movable blades along the main shaft; one end of each of the plurality of second movable blades is rotatably connected with the main shaft; and the other end thereof is connected with the rotating shaft of another pneumatic compressor connected to the main shaft.

**37.** The paired compress gas energy production system according to claim 36, wherein the plurality of first movable blades and the plurality of second movable blades are all formed by the plurality of sub-blades by splicing.

**38.** The paired compress gas energy production system according to claim 37, wherein each of the plurality of first movable blades and each of the plurality of second movable blades comprise an upper movable blade, a side movable blade and a lower movable blade respectively, which are connected in sequence.

**39.** The paired compress gas energy production system according to claim 38, wherein an included angle between the upper movable blade and the side movable blade is 90°-180°; and an included angle between the side movable blade and the lower movable blade is 90°-180°.

**40.** The paired compress gas energy production system according to claim 36, wherein a shape of the cross section of each of the plurality of first movable blade and a shape of the cross section of each of the plurality of the second movable blade are both triangular or fusiform, and the first movable blade and the second movable blade are all arc-shaped blades.

**41.** The paired compress gas energy production system according to claim 36, wherein outer diameters of the plurality of first movable blade are smaller than outer diameters of the plurality of second movable blade.

**42.** The paired compress gas energy production system according to claim 36, wherein the plurality of first movable blades and the plurality of second movable blades are all arc-shaped blades.

**43.** The paired compress gas energy production system according to claim 35, wherein a lower end of the main shaft is connected with a landing frame.

**44.** The paired compress gas energy production system according to claim 1, wherein the paired compress gas energy storage device comprises an inner body and an outer body sleeved on the outside of the inner body.

**45.** The paired compress gas energy production system according to claim 44, wherein the inner body is the high-pressure air container, a cavity formed between the outer body and the inner body is the low-pressure air container; or the inner body is the low-pressure air container, and a cavity formed between the outer body and the inner body is the high-pressure air container.

**46.** The paired compress gas energy production system according to claim 1, wherein the pneumatic compressor is a compressor.

**47.** A paired compress gas energy production method, wherein the method comprises the steps of: providing the high-pressure air container filled with the first gas and the low-pressure air container filled with the second gas; transferring the second gas in the low-pressure air container into the high-pressure air container; and forming compress gas difference capable of reflecting paired compress gas energy between the low-pressure air container and the high-pressure air container.
